Europäisches Patentamt

European Patent Office

Office européen des brevets

(11) Veröffentlichungsnummer: **0 100 084**
**B1**

(12) **EUROPÄISCHE PATENTSCHRIFT**

(45) Veröffentlichungstag der Patentschrift: **25.05.88**

(21) Anmeldenummer: **83107284.8**

(22) Anmeldetag: **25.07.83**

(51) Int. Cl.⁴: **H 04 M 1/02**

(54) Sichtschirmtelefon.

(30) Priorität: **28.07.82 DE 3228210**

(43) Veröffentlichungstag der Anmeldung:
**08.02.84 Patentblatt 84/06**

(45) Bekanntmachung des Hinweises auf die
Patenterteilung:
**25.05.88 Patentblatt 88/21**

(84) Benannte Vertragsstaaten:
**AT CH DE FR GB IT LI NL SE**

(56) Entgegenhaltungen:
**WO-A-81/02481**
**BE-A- 812 403**

(73) Patentinhaber: **Siemens Aktiengesellschaft**
**Berlin und München**
**Wittelsbacherplatz 2**
**D-8000 München 2 (DE)**

(72) Erfinder: **Kaufmann, Peter, Ing.grad.**
**Lindenweg 1**
**D-8031 Gilching (DE)**
Erfinder: **Noé, Werner, Dipl.-Ing.**
**Am Schlosspark 14**
**D-8035 Gauting (DE)**
Erfinder: **Gilch, Gerhard, Dr.rer.pol., Ing.grad.**
**Heinleinstrasse 12**
**D-8000 München 71 (DE)**

Courier Press, Leamington Spa, England.

EP 0 100 084 B1

## Beschreibung

Die Erfindung betrifft ein Sichtschirmtelefon mit einer Fernsprecheinrichtung mit Komfortfunktionen sowie einer mit einer Buchstabentastatur ausgestatteten Einrichtung für Text- und Speicherfunktionen und einer als Sichtschirm ausgebildeten Anzeigevorrichtung, wobei sämtliche Einrichtungen über einen Daten-, Adress-sowie Steuerbus miteinander verknüpft sind.

Aufgabe der Erfindung ist es, ein Sichtschirmtelefon aufzuzeigen, das das Telefonieren mit Komfortfunktion sowie die Datenkommunkation auf Bildschirmtext-Niveau erlaubt.

Die Aufgabe wird dadurch gelöst, daß die Fernsprecheinrichtung mit Komfortfunktionen aus einer Kurzwahleinrichtung besteht, deren vollständiger Speicherinhalt auf dem Bildschirm des Sichtschirmtelefons darstellbar ist und daß die Einrichtung für Text- und Speicherfunktionen an Bildschirmtextzentralen anschließbar ist.

Durch die Druckschrift WO—A—8 102 481 ist ein Sichtschirmetelefon bekannt, das eine Fernsprecheinrichtung mit Komfortfunktionen, eine mit Buchstabentasten ausgestattete Einrichtung für Text- und Speicherfunktionen sowie eine als Sichtschirm ausgebildete Anzeigevorrichtung aufweist, wobei sämtliche Einrichtungen über einen Daten-, Adress- sowie Steuerbus miteinander verknüpft sind. Dieses Gerät ist jedoch nicht an Bildschirmtextzentralen anschließbar.

Kurzwahleinrichtungen sind an sich bekannt. So ist es beispielsweise bei derartigen Einrichtungen üblich, den einzelnen Tasten eines Tastwahlblockes einer Wähleinrichtung mehrstellige Rufnummern zuzuordnen und diese bei Bedarf durch Tastendruck auszusenden. Nachteilig ist dabei, daß die eingespeicherten Rufnummern in Vergessenheit geraten können, so daß der Wert einer derartigen Einrichtung stark vermindert werden kann. Dagegen wird bei der nunmehr vorgestellten Kurzwahleinrichtung der komplette Speicherinhalt auf dem Bildschirm abgebildet, so daß die gewünschte Rufnummer z.B. durch Eingeben der entsprechenden Laufnummer des Registers aussendbar ist.

Es kann vorteilhaft sein, wenn die Fernsprecheinrichtung mit Komfortfunktionen aus einer Wahlwiederholungseinrichtung besteht, bei der eine Vielzahl von Rufnummern wiederholbar und auf dem Bildschirm durch Text ergänzbar sind.

Üblicherweise besteht bei normalen Komfortfernsprechern die Möglichkeit, die zuletzt gewählte Rufnummer zu wiederholen. Die vorher gewählte Rufnummer wird dabei gelöscht. Bei der Wahlwiederholung gemäß der Erfindung sind jedoch die eingespeicherten Rufnummern auf einfache Weise wiederholbar, so daß der Bedienungskomfort der Station erheblich erweitert wird.

Weiterhin kann es vorteilhaft sein, daß die Fernsprecheinrichtung mit Komfortfunktion aus einer Gebührenanzeigeeinrichtung besteht, wobei die Gesprächsgebühr der jeweiligen Gebühreneinheit frei zuordenbar ist.

Dies kann insbesondere für den gewerblichen Bereich von besonderem Interesse sein.

Eine Weiterbildung der Komforteinrichtung kann darin bestehen, daß die Einrichtung für Text- und Speicherfunktionen aus einem Terminkalender besteht, wobei die Termine automatisch nach der Zeit sortierbar sind.

In diesen Kalender können dann neben Uhrzeit und Name das Datum sowie eine Stoppuhr vorgesehen sein.

Eine weitere vorteilhafte Ausbildung des Sichtschirmtelefons besteht darin, daß zum angegebenen Termin das Sichtschirmtelefon ein akustisches und/oder optisches Zeichen abgibt und auf dem Bildschirm die Terminseite erscheint, wobei der gerade abgelaufene Termin invers dargestellt ist.

Zur Erleichterung von Wartungsarbeiten, Geräteaustausch usw. kann es zweckmäßig sein, daß das Register des Sichtschirmtelefons in die Bildschirmtextzentrale abspeicherbar und wieder abrufbar ist.

Vorteilhaft kann es sein, daß als zusätzliche Einrichtung ein integrierter Steckkartenleser vorgesehen ist, wobei die Steckkarte Teile von Speicherfunktionen übernimmt.

Damit können eine begrenzte Anzahl von Speicherinformationen in der Steckkarte vorhanden sein, so daß sich das Merken beispielsweise von Rufnummern bei Wechsel des Standortes erübrigt. Die Auswertung der Berechtigung des Teilnehmers kann durch den Steckkartenleser erfolgen.

Für beide Anwendungen ist eine kleine Buchstabentastatur für Einfingerbedienung in alphabetischer Zeilenanordnung ausreichend.

Vorteilhaft kann es sein, daß das Sichtschirmtelefon als weitere zusätzliche Einrichtung ein Sonderregister aufweist, in das Telefonleistungsmerkamale, Dienststellenverzeichnisse, FAX-Nummern und/oder Nummern von häufig benötigten Bildschirmtextseiten einspeicherbar sind.

Um ein Funktionieren der Fernsprecheinrichtung bei Netzausfall zu ermöglichen, ist es zweckmäßig, daß die Fernsprecheinrichtung und die Wähleinrichtung über eine zusätzliche Bus-Verbindung für den Notbetrieb verknüpft sind.

Damit sind die anderen Funktionen abgeschaltet. Die Speicher werden zur Erhaltung ihrer Information batteriegepuffert.

Zur Kommunikation von verschiedenen Teilnehmern untereinander ist es vorteilhaft, eine zusätzliche Modemschnittstelle vorzusehen.

Im folgenden sei die Erfindung anhand eines Blockschaltbildes sowie einer Ansicht des Gerätes näher erläutert.

Das Blockschaltbild zeigt den Zusammenhang zwischen den verschiedenen Einrichtungen eines Sichtschirmtelefones auf. Über einen Daten-, Adress- und Steuerbus B sind eine Buchstabentastatur A, eine Zifferntastatur Z, eine Fernsprechschaltung F, die mit der a/b-

Leitung eines Vermittlungssystems verbunden ist, ein Parallel-Serienumsetzer P/S, der an ein Modem angeschlossen ist, ein Namenspeicher N sowie ein Steckkartenleser SK mit einem Mikrocomputer µP verbunden. An den Daten-, Adress- und Steuerbus ist ein Multiplexer M (Umschalter) angeschlossen, der zur Entkopplung der Bus-Systeme dient und der mit Einrichtungen zur Steuerung der Anzeigevorrichtungen in Verbindung steht. Die Einrichtungen bestehen aus einem Bildwiederholspeicher BWS, einem Zeilengenerator ZG, der mit einer Einrichtung T zur Takterzeugung in Verbindung steht, sowie einer Monitorsteuerung und einer Anzeigevorrichtung in Form eines Bildschirmes BS.

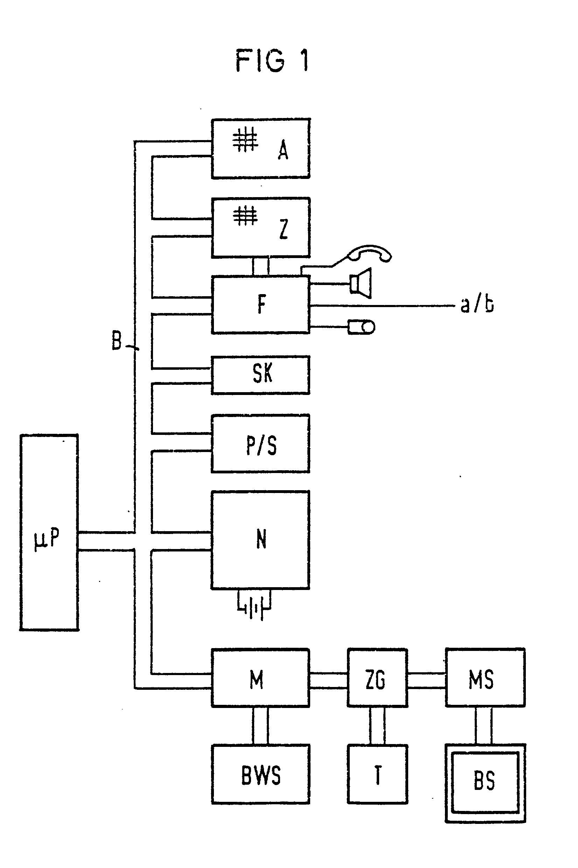

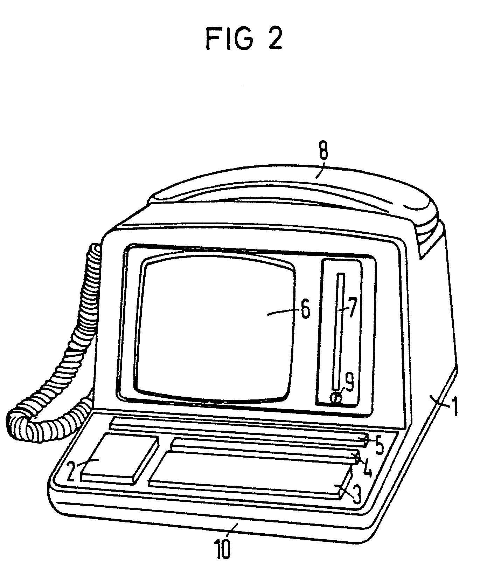

Die Abbildung zeigt ein Sichtschirmtelefon, das aus einem Gehäuse 1, dessen vorderer Teil eine ähnlich einer Schreibmaschine geformte Fläche zur Aufnahme von Funktionstaten aufweist, besteht. So ist im linken vorderen Teil die Zifferntastatur 2 angeordnet. Daneben ist eine Buchstabentastatur 3 vorgesehen. Über der Buchstabentastatur sind Funktionstasten 4 sowie ein weiteres Tastenfeld für weitere Funktionstasten 5 angeordnet. Gegenüber der genannten Fläche ist ein dem Betrachter zugeneigter Bildschirm 6 vorgesehen, neben dem eine Aufnahme 7 für eine Steckkarte angeordnet ist. Der Handapparatekörper 8 des Sichtschirmtelefons ist quer zum Gehäuse 1 angeordnet und liegt auf der Gehäuseoberfläche des Sichtschirmtelefons auf. Das Sichtschirmtelefon ist zusätzlich mit einem Schlüsselschalter 9 und einem Mikrofon 10 zum Freisprechen versehen.

**Patentansprüche**

1. Sichtschirmtelefon mit einer Fernsprecheinrichtung mit Komfortfunktionen sowie einer mit einer Buchstabentastatur (A) ausgestatteten. Einrichtung für Text- und Speicherfunktionen und einer als Sichtschirm ausgebildeten Anzeigevorrichtung (BS, 6) wobei sämtliche Einrichtungen über einen Daten-, Adress- sowie Steuerbus (B) miteinander verknüpft sind, dadurch gekennzeichnet daß die Fernsprecheinrichtung (F) mit Komfortfunktionen aus einer Kurzwähleinrichtung besteht, deren vollständiger Speicherinhalt auf dem Bildschirm (BS, 6) des Sichtschirmtelefons darstellbar ist und die Einrichtung für Text- und Speicherfunktionen an Bildschirmtextzentralen anschließbar ist.

2. Sichtschirmtelefon nach Anspruch 1, dadurch gekennzeichnet daß die Fernsprecheinrichtung (F) mit Komfortfunktionen aus einer Wahlwiederholungseinrichtung besteht, bei der eine Vielzahl von Rufnummern wiederholbar und auf dem Bildschirm durch Text ergänzbar sind.

3. Sichtschirmtelefon nach Anspruch 1, dadurch gekennzeichnet daß die Fernsprecheinrichtung mit Komfortfunktion aus einer Gebührenanzeigeeinrichtung besteht, wobei die Gesprächsgebühr der jeweiligen Gebühreneinheit frei zuordenbar ist.

4. Sichtschirmtelefon nach Anspruch 1, dadurch gekennzeichnet daß die Einrichtung für Text- und Speicherfunktionen aus einem Terminkalender besteht, wobei die Termine automatisch nach der Zeit sortierbar sind.

5. Sichtschirmtelefon nach Anspruch 4, dadurch gekennzeichnet daß zum angegebenen Termin das Sichtschirmtelefon ein akustisches und/oder optisches Zeichen abgibt und auf dem Bildschirm (BS, 6) die Terminseite erscheint, wobei der gerade abgelaufene Termin invers dargestellt ist.

6. Sichtschirmtelefon nach Anspruch 1, dadurch gekennzeichnet daß das Register des Sichtschirmtelefons in die Bildschirmtextzentrale abspeicherbar und wieder abrufbar ist.

7. Sichtschirmtelefon nach Anspruch 1, dadurch gekennzeichnet daß als zusätzliche Einrichtung ein integrierter Steckkartenleser (SK) vorgesehen ist, wobei die Steckkarte Teile von Speicherfunktionen übernimmt.

8. Sichtschirmtelefon insbesondere nach Anspruch 1, dadurch gekennzeichnet daß das Sichtschirmtelefon als weitere zusätzliche Einrichtung ein Sonderregister aufweist, in das Telefonleistungsmerkmale, Dienststellenverzeichnisse, FAX-Nummern und/oder Nummern von häufig benötigten Bildschirmtextseiten einspeicherbar sind.

9. Sichtschirmtelefon nach Anspruch 1, dadurch gekennzeichnet daß die Fernsprecheinrichtung und die Wähleinrichtung über eine zusätzliche Busverbindung für den Notbetrieb verknüpft sind.

10. Sichtschirmtelefon nach Anspruch 1, dadurch gekennzeichnet daß eine Modem-Schnittstelle vorgesehen ist, die eine Kommunkation von verschiedenen Teilnehmern miteinander zuläßt.

**Revendications**

1. Téléphone à écran de visualisation, comprenant un dispositif téléphonique à fonctions de confort, ainsi qu'un dispositif, muni d'un clavier de caractères (A) pour fonctions de texte et de mémoire et un dispositif d'affichage (BS, 6) réalisé comme un écran de visualisation, tous les dispositifs étant interconnectés par un bus de données, d'adresses et de commande (B), caractérise en ce que le dispositif téléphonique (F) à fonctions de confort consiste en un dispositif de sélection abrégée avec une mémoire dont tout le contenu peut être visualisé sur l'écran (BS, 6) du téléphone, et le dispositif pour fonctions de texte et de mémoire peut être connectée à des centraux de vidéotex.

2. Téléphone selon la revendication 1, caractérisé en ce que le dispositif téléphonique (F) à fonctions de confort consiste en un dispositif de répétition d'appel permettant le répétition d'un grand nombre de numéros d'appel qui peuvent être comprétés de texte sur l'écran.

3. Téléphone selon la revendication 1, caractérisé en ce que le dispositif téléphonique à fonctions de confort consiste en un dispositif d'affi-

chage de taxes, avec lka possibilité de coordonner la taxe téléphonique librement à la taxe de base correspondante.

4. Téléphone selon la revendication 1, caractérisé en ce que le dispositif pour fonctions de texte et de mémoire consiste en un échéancier, avec la possibilité de classement automatique des échéances dans le temps.

5. Téléphone selon la revendication 4, caractérisé en ce qu'il délivre un signal acoustique et/ou optique à l'échéance indiquée, avec apparition sur l'écran (BS, 6) de la page d'échéances et représentation en vidéo inverse de l'échéance venue à terme.

6. Téléphone selon la revendication 1, caractérisé en ce que son registre peut être mèmorisé dans le central de vidéotex et peut de nouveau être appelé.

7. Téléphone selon la revendication 1, caractérisé en ce qu'il comporte, en tant que dispositif supplémentaire, un lecteur intégré (SK) de cartes de circuits imprimés embrochables, la carte embrochable assurant une partie de fonctions de mémorisation.

8. Téléphone à écran de visualisation, en particulier selon la revendication 1, caractérisé en ce qu'il comporte, comme autre dispositif supplémentaire, un registre particulier dans lequel peuvent être mémorisés des caractéristiques de capacité du téléphone, des répertoires de services, des numèros d'abonnés au réseau de télécopie et/ou des numéros de pages de vidéotex souvent nécessaires.

9. Téléphone selon la revendication 1, caractérisé en ce que le dispositif téléphonique et le dispositif de numèrotation sont raccordés par une connexion de bus supplémentaire pour un fonctionnement de secours.

10. Téléphone selon la revendication 1, caractérisé par la prévision d'une interface à modem permettant la communication de plusieurs abonnés entre eux.

**Claims**

1. A video-telephone comprising a telephone device with added-feature functions and a device, equipped with a letter keyboard (A), for text- and storage functions, and with a display device (BS, 6) in the form of a screen, where all the devices are logic-linked to one another via a data-address- and control bus (B), characterised in that the telephone device (F) with added-feature functions comprises an abbreviated dialling device, whose entire store content can be displayed on the screen (BS, 6) of the video-telephone, and in that the device for text- and storage functions can be connected to screen text control centres.

2. A video-telephone as claimed in claim 1, characterised in that the telephone device (F) with added-feature functions comprises an automatic redialling device, where a plurality of subscriber numbers can be repeated and supplemented by text on the screen.

3. A video-telephone as claimed in claim 1, characterised in that the telephone device with added-feature functions comprises a charge display device, where the conversation charge can be freely assigned to the respective charge unit.

4.A video-telephone as claimed in claim 1, characterised in that the device for text- and storage functions comprises an appointment calendar, in which the appointments can be automatically sorted chronologically.

5. A video-telephone as claimed in claim 4, characterised in that at the time of the given appointment the video-telephone emits an acoustic and/or optical signal and the appointment page, on which the appointment which has fallen due is displayed in inverse form, appears on the screen (BS, 6).

6. A video-telephone as claimed in claim 1, characterised in that the register of the video-telephone can be transferred to the screen text control centre and recalled therefrom.

7. A video-telephone as claimed in claim 1, characterised in that an integrated insert card reader (SK) is provided as additional device, where the insert card assumes parts of storage functions.

8. A video-telephone, in particular as claimed in claim 1, characterised in that as a further additional device the video-telephone comprises a special register into which telephone service features, lists of service stations, FAX-numbers and/or numbers of frequently required screen text pages can be input.

9. A video-telephone as claimed in claim 1, characterised in that the telephone device and the dialling device are logic-linked via an additional bus connection for stand-by operation.

10. A video-telephone as claimed in claim 1, characterised in that a modem interface is provided which permits communication between various subscribers.

## FIG 1

# FIG 2